# EUROPEAN PATENT APPLICATION

(11) **EP 3 770 888 A1**
(43) Date of publication of application: **27.01.2021**
(21) Application number: 19382623.7
(22) Date of filing: 23.07.2019
(51) Int. Cl.: G09C 1/00, H04L 9/00, H04L 9/32

(54) **A BEHAVIORAL AND PHYSICAL UNCLONABLE FUNCTION AND A MULTI-MODAL CRYPTOGRAPHIC AUTHENTICATION METHOD USING THE SAME**

(71) Applicant: Universidad de Sevilla, 41013 Sevilla (ES)
(72) Inventor: BATURONE CASTILLO, María Iluminada, 41013 Sevilla (ES); PRADA DELGADO, Miguel Ángel, 41013 Sevilla (ES)
(74) Representative: Clarke Modet & Co.

(57) **Abstract**

A behavioral and physical unclonable function (BPUF) and a multi-modal cryptographic authentication method using the BPUF. The BPUF comprises a cell module (110) formed by cells (112) with first (114) and second (116) identical electronic circuits; a control unit (140) for challenging N cells (112) in response to a challenge (102); a physical response module (120), formed by physical condition evaluation modules (122), each configured to evaluate a physical condition on the electronic circuits of the N cells (112) addressed by the challenge to generate an N-bit physical response (152) of an *i-th* measurement (150); and a behavioral response module (130), formed by behavioral condition evaluation modules (132), each configured to evaluate a behavioral condition on a physical response for R measurements to generate an N-bit behavioral response (154) of the *i-th* measurement (150).

When the BPUF is integrated on a device, the privacy-preserving authentication method guarantees that the device is not falsified or tampered with, and ensures the integrity and confidentiality of the information it communicates.

## Description

### Field of the Invention

The present invention relates to methods for authenticating electronic devices, for instance to guarantee that they have not been falsified or tampered with, and that they are able to ensure the integrity and confidentiality of the information they communicate to other devices.

### Background of the Invention

The protection of information is of crucial importance, especially when dealing with sensitive data. To achieve a considerable degree of protection, information security has to be conceived from the design of the cryptographic algorithms until its implementation into cryptographic circuits. It is at this time when the creation of a secret key, its storage, and use are especially critical. Military communications are an example of critical applications in which the highest level of security is required. Tampering, which consists in permanently manipulating an entity with the objective of carrying out an unauthorized operation, should be particularly avoided in the case of cryptographic circuits. Multiple solutions to improve anti-tampering were proposed, most of them focused on specific watermarking designs that prove the intellectual property rights of the producers and owners of the chips. Other solutions focus on generating tamper evidences and tamper resistances against attacks [Kahng2001] [Kommer1999].

In 2002, Pappu et al. introduced a new type of tamper-resistant one-way functions called physical one-way functions, which were later named physical unclonable functions (PUFs) after the paper of Gassend et al. in the same year [Gasse2002]. A physical unclonable function (PUF) is a physical construction that exploits the unique physical variations produced during the manufacturing process to generate unique responses (or outputs) to given challenges (or inputs). Due to the uncontrollable nature of manufacturing process variations, each manufactured instance of a PUF can be identified by its unique behavior conveniently evaluated by the unique challenge-response pairs of the PUF. Therefore, if the variations that produce the behavior differences are not controllable, physical unclonability results from the impossibility to create two instances that, given the same challenges, provide similar responses. PUFs provide tamper resistance because it is impossible to modify a manufactured PUF so that it could continue working and providing responses in a different way to its intrinsic nature.

Some of the PUFs that have been studied in greater depth are the electronic PUFs, and among them, those which predominate in the state of the art are memory-based (such as PUFs based on static random access memories, SRAM PUFs) [Batu2015] and delay-based (such as the so-called arbiters [Gasse2002] and PUFs based on ring oscillators, RO PUFs [Mait2010]). In all of them, challenges and responses are binary. The challenges are the binary vectors that address the set of two theoretically identical constructions that are the basic element of the PUF. For example, the challenges of SRAM PUFs address the bit memory cells considered; the challenges of RO PUFs address the pairs of ring oscillators to compare; the challenges of arbiter PUFs address the pairs of paths to evaluate, and so on. The achievement or not of a physical condition is evaluated to obtain a binary response. The physical condition evaluated in a memory cell of an SRAM PUF is if one of the two theoretically identical inverters wins or not at power up so as to impose a logic 1 or 0 in the corresponding bit of the response. In the case of an RO PUF, the bit of the response is 1 or 0 if the difference between the oscillation frequencies of the first and the second ring oscillators in the pair considered is positive or negative. The PUFs that provide a small set of challenge-response pairs, like SRAM and RO PUFs, are called weak PUFs. The PUFs that provide a large set, like arbiter PUFs, are called strong PUFs. Strong PUFs fulfill the property of one-wayness, which means there is no algorithm capable of obtaining the challenges from the responses provided by the PUF. Similar to the definition of a one-way function in cryptography, it is assumed that the challenge-response set of a strong PUF is large and unpredictable enough that an attacker cannot create an inverse lookup table to invert given responses. Due to this fact, mathematical unclonability is another property of PUFs because a virtual copy of the PUF is also unfeasible.

The properties of PUFs have been exploited to identify devices uniquely (like a biometry for devices), which in turn have been employed in several lightweight authentication protocols [Delv2015]. However, several attacks have been reported on PUFs, which calls into question the security of the proposals made to date [Katzen2012]. The technique applied in [Beck2015] uses a machine learning algorithm to attack the arbiter PUFs, and it could theoretically be applied to other PUFs. This attack shows that it is possible to create virtual copies of PUFs. Regarding memory-based PUFs, there have been shown that bias as well as spatial correlation exist in many SRAM PUF conventional architectures, which makes them predictable (thus mathematically clonable) to some extent [Wilde2018]. In addition, using optical semi-invasive attacks from the chip backside (photonic emission analysis, laser fault injection, and optical contactless probing), the work in [Tajik2017] demonstrates that the responses generated by a PUF can be predicted, manipulated and directly probed without affecting the behavior of the PUF, so that they cannot be considered as tamper-evident or tamper-resistant. This is demonstrated also in [Nedos2013] by using laser stimulation for semi-invasive, backside, single-trace readout of logic states in SRAMs. Moreover, the works in [Helfm2013] and [Helfm2014] show that SRAM PUFs can be not only fully characterized and emulated but also cloned physically. They used a Focused Ion Beam circuit edit and produced a fully-functional second instance with identical start-up values of a first instance SRAM PUF.

The above mentioned attacks reveal the need to improve the security of reported PUFs.

### References

[Kahng2001] A. Kahng, J. Lach, W. Mangione-Smith, S. Mantik, I. Markov, M. Potkonjak, P. Tucker, H. Wang, and G. Wolfe, "Constraint-based watermarking techniques for design IP protection," IEEE Transactions on Computer-Aided Design of Integrated Circuits and Systems, vol. 20, no. 10, pp. 1236-1252, 2001.
[Kommer1999] O. Kömmerling and M. G. Kuhn, "Design principles for tamper-resistant smartcard processors," pp. 2-2, 1999.
[Gasse2002] B. Gassend, D. Clarke, M. van Dijk, and S. Devadas, "Silicon physical random functions," in Proceedings of the 9th ACM conference on Computer and communications security - CCS '02. New York, New York, USA: ACM Press, 2002, p. 148.
[Batu2015] I. Baturone, M. A. Prada-Delgado, and S. Eiroa, "Improved Generation of Identifiers, Secret Keys, and Random Numbers From SRAMs," IEEE Transactions on Information Forensics and Security, vol. 10, no. 12, pp. 2653-2668, dec 2015.
[Mait2010] A. Maiti, J. Casarona, L. McHale, and P. Schaumont, "A large scale characterization of RO-PUF," in 2010 IEEE International Symposium on Hardware-Oriented Security and Trust (HOST). IEEE, jun 2010, pp. 94-99.
[Delv2015] J. Delvaux, R. Peeters, D. Gu, and I. Verbauwhede, "A Survey on Lightweight Entity Authentication with Strong PUFs," ACM Computing Surveys, vol. 48, no. 2, pp. 1-42, oct 2015.
[Katzen2012] S. Katzenbeisser, Ü. Kocaba,s, V. Rož̌̌i'c, A.-R. Sadeghi, I. Verbauwhede, and C. Wachsmann, "PUFs: Myth, Fact or Busted? A Security Evaluation of Physically Unclonable Functions (PUFs) Cast in Silicon." Springer, Berlin, Heidelberg, 2012, pp. 283-301.
[Beck2015] G. T. Becker, "The Gap Between Promise and Reality: On the Insecurity of XOR Arbiter PUFs." Springer, Berlin, Heidelberg, 2015, pp. 535-555.
[Wilde2018] F. Wilde, B. M. Gammel, and M. Pehl, "Spatial Correlation Analysis on Physical Unclonable Functions," IEEE Transactions on Information Forensics and Security, pp. 1-1, 2018.
[Tajik2017] S. Tajik, On the Physical Security of Physically Unclonable Functions, Ph.D. Dissertation, Univ. Berlin, 2017.
[Nedos2013] D. Nedospasov, J.-P. Seifert, C. Helfmeier, and C. Boit, "Invasive PUF Analysis," in 2013 Workshop on Fault Diagnosis and Tolerance in Cryptography. IEEE, aug 2013, pp. 30-38.
[Helfm2013] C. Helfmeier, C. Boit, D. Nedospasov, and J.-P. Seifert, "Cloning Physically Unclonable Functions," in 2013 IEEE International Symposium on Hardware-Oriented Security and Trust (HOST). IEEE, jun 2013, pp. 1-6.
[Helfm2014] C. Helfmeier, C. Boit, D. Nedospasov, S. Tajik, and J.-P. Seifert, "Physical vulnerabilities of Physically Unclonable Functions," in Design, Automation & Test in Europe Conference & Exhibition (DATE), 2014. New Jersey: IEEE Conference Publications, 2014, pp. 1-4.

### Description of the Invention

Physical unclonable functions (PUFs) have gained a great interest for their capability to identify devices uniquely and to be a lightweight primitive in cryptographic protocols. However, several reported attacks have shown that virtual copies (mathematical clones) as well as physical clones of PUFs are possible, so that they cannot be considered as tamper-resistant or tamper-evident, as claimed.

The invention relates to a behavioral and physical unclonable function (BPUF), and a method for secure authentication of a device using the BPUF, that solves the above-mentioned problems. The BPUF of the present invention is a device or a physical construction integrated in an electronic device and used in the authentication of the electronic device. The BPUF is a physically and behaviorally-defined set of digital fingerprints that serves as a set of identifying traits for a semiconductor device. The BPUF is tamper resistant, and tamper-evident to the physical attacks reported to currently known PUFs because those attacks change the behaviorally-defined fingerprints in the BPUFs. Physical clones of BPUFs are very much challenging to obtain since BPUFs consider behavioral or dynamic identifying traits. The multimodal cryptographic authentication method of the present invention is privacy-preserving because the identifying traits of the device are not disclosed. Besides, the authentication method can be very lightweight and a non-protected communication channel can be employed between the device containing the BPUF instance and the verifier.

The BPUF of the present invention evaluates not only physical but also behavioral distinctive features caused by manufacturing process variations; particularly, behavioral features that are evaluated with several measurements of a given physical response. Cryptographic constructions based on BPUFs and cryptographically secure and privacy-preserving authentication protocols using BPUFs are also herein presented.

The BPUF comprises a cell module, a physical response module, a behavioral response module and a control unit. The cell module is formed by a plurality of M cells. Each of the cells in turn comprises a first and a second electronic circuits, which are theoretically identical, and preferably of the type used in physical unclonable functions. The control unit is configured to challenge a plurality of N cells in response to a challenge received. The control unit also controls the physical and behavioral response modules.

The physical response module is formed by at least one physical condition evaluation module. Each physical condition evaluation module is configured to evaluate a physical condition on the electronic circuits of the N cells addressed by the challenge to generate an N-bit physical response of an *i-th* measurement. Each generated physical response is reproducible, unique and unpredictable.

The behavioral response module is formed by at least one behavioral condition evaluation module. Each behavioral condition evaluation module is configured to evaluate a behavioral condition on at least one physical response for a set of R measurements to generate an N-bit behavioral response of the *i-th* measurement. Each generated behavioral response is reproducible, unique and unpredictable.

According to an embodiment, each physical condition evaluation module comprises at least one physical condition evaluation unit and at least one behavioral condition evaluation unit, wherein each physical condition evaluation unit is configured to evaluate a physical condition on the electronic circuits of at least one of the N cells addressed by the challenge, and wherein each behavioral condition evaluation unit is configured to evaluate a behavioral condition on at least one physical condition evaluated on at least one of the N cells addressed by the challenge for the set of R measurements.

In an embodiment, the *b-th* bit value of each behavioral response is a first value if the *b-th* bits of at least one physical response of the set of R measurements meet a condition on a non-invertible function that is evaluated by a behavioral condition evaluation unit of the corresponding behavioral condition evaluation module when the *b-th* cell is challenged, and is a second value, opposite to the first value, if the condition is not met. In an embodiment, the *b-th* bit value of each behavioral response is a first value if the R values measured of the *b-th* bit of the physical response are the same as the value of a reference bit of a reference physical response, and is a second value, opposite to the first value, if at least one of the R values measured of the *b-th* bit of the physical response is not the same as the value of the reference bit.

In an embodiment, the *b-th* bit value of each physical response is a first value, if the corresponding physical condition evaluated on the *b-th* cell is met; and is a second value, opposite to the first value, if the corresponding physical condition evaluated on the *b-th* cell is not met.

A second aspect of the present invention refers to a method for secure authentication of a device, wherein the device comprises a behavioral and physical unclonable function as previously defined. The method comprises a preliminary registration phase and a verification phase.

The preliminary registration phase comprises the following steps:
- Sending, by a communication unit of a verifier, a challenge to the device.
- Generating, by the behavioral and physical unclonable function, an N-bit physical response and an N-bit behavioral response of a reference measurement in response to the challenge.
- Applying, by a physical cryptographic module of the device, a cryptographic algorithm on the physical response of the reference measurement using a secret S, to generate non-sensitive helper data PDx, which are stored in a memory of the device. The cryptographic algorithm is preferably a helper data algorithm.
- Applying, by a behavioral cryptographic module of the device, a cryptographic algorithm on the behavioral response of the reference measurement using a random seed and the secret S to generate non-sensitive reference identifying data.
- Sending, by a communication unit of the device, the random seed and the reference identifying data to the verifier, where they are stored in a memory.

The verification phase comprises the following steps:
- Sending, by the communication unit of the verifier, the challenge and the random seed to the device.
- Generating, by the behavioral and physical unclonable function, an N-bit physical response and an N-bit behavioral response of an *i-th* measurement in response to the challenge.
- Reconstructing, by the physical cryptographic module of the device, the secret S using the physical response of the *i-th* measurement and the non-sensitive helper data PDx.
- Applying, by the behavioral cryptographic module of the device, the cryptographic algorithm on the behavioral response of the *i-th* measurement using the random seed and the reconstructed secret S to generate non-sensitive identifying data.
- Sending, by the communication unit of the device, the identifying data to the verifier, using a secure communication protocol. The secure communication protocol may employ an asymmetric cryptographic algorithm in which the secret S is related to a pair of private and public cryptographic keys uniquely associated with the device, and wherein the private cryptographic key is used by the device in the digital signatures of the messages sent by the communication unit.
- Computing, by a verification unit of the verifier, a distance using the identifying data and the reference identifying data, and determining and communicating an authentication result of the device. The authentication result is successful if the computed distance is smaller than an authentication threshold; otherwise, the authentication fails. If the computed distance is equal to the authentication threshold, the authentication may be considered a success or a failure, depending on the particular application.

The cryptographic algorithm applied by the behavioral cryptographic module may be a symmetric ciphering algorithm that applies a XOR operation on the behavioral response with a salt S_0 generated by a cryptographically secure pseudorandom number generator (CSPRNG). In an embodiment, the distance computed by the verification unit of the verifier is calculated as the division of (i) the Hamming distance between the identifying data *IDx_i* and the reference identifying data *IDx_0,* and (ii) the number of logic 1's in the vector resulting from XOR{OR[*IDx_i, IDx_0*]*, S_0*}*.* In another embodiment, the distance computed by the verification unit of the verifier is calculated as the division of (i) the double of the Hamming distance between the identifying data and the reference identifying data, and (ii) the sum of (a) the number of logic 1's in the behavioral response of the *i-th* measurement, and (b) the number of logic 1's in the behavioral response of the reference measurement, and (c) the Hamming distance between the identifying data and the reference identifying data.

The cryptographic algorithm applied by the behavioral cryptographic module of the device may be based on a computationally hard problem. In an embodiment, the behavioral cryptographic module applies a commitment scheme based on a learning with errors problem, in which the behavioral response and the secret S are the secrets, and the distance computed by the verification unit of the verifier is calculated from the result of adding or subtracting the identifying data and the reference identifying data.

As an example to validate the proposed invention, BPUFs based on Static Random-Access Memories (SRAM BPUFs), with one physical and one behavioral responses to given challenges, were analyzed experimentally using integrated circuits fabricated in a 90-nm CMOS technology. If an attacker succeeds in one of the reported attacks on SRAM PUFs, the highest probability to succeed in the proposed SRAM BPUFs was evaluated experimentally as 1.5e-34, considering the influence of changes in the operating conditions (power supply voltage, temperature, and aging).

### Brief Description of the Drawings

A series of drawings which aid in better understanding the invention and which are expressly related with an embodiment of said invention, presented as a non-limiting example thereof, are very briefly described below.
Figure 1 shows an example of how a BPUF is challenged by a binary challenge x and generates two binary responses, ux_i and vx_i. The bits with logic value 1 are shown in black and those with logic value 0 are shown in white.
Figure 2 depicts a block diagram of a BPUF with multiple physical and behavioral responses.
Figure 3 is a block diagram representing the components of a BPUF according to an embodiment.
Figure 4 is a flow diagram showing the actions performed by the control unit.
Figure 5 is a flow diagram similar to the one depicted in Figure 4, using encrypted physical responses.
Figure 6 illustrates the registration phase of the authentication method.
Figure 7 illustrates the verification phase of the authentication method.
Figure 8 shows, on the left, the distribution of the fractional Hamming distances (FHDs) between the physical responses of genuine SRAM BPUF instances and, on the right, the distribution of the FHDs between the physical responses of genuine and impostor SRAM BPUF instances.
Figure 9 shows, on the left, the distribution of the Jaccard distances (JDs) between the physical responses of genuine SRAM BPUF instances and, on the right, the distribution of the physical responses of the JDs between genuine and impostor SRAM BPUF instances.
Figure 10 shows, on the left, the distribution of the fractional Hamming distances (FHDs) between the behavioral responses of genuine SRAM BPUF instances and, on the right, the distribution of the FHDs between the behavioral responses of genuine and impostor SRAM BPUF instances.
Figure 11 shows, on the left, the distribution of the Jaccard distances (JDs) between the behavioral responses of genuine SRAM BPUF instances and, on the right, the distribution of the behavioral responses of the JDs between genuine and impostor SRAM BPUF instances.
Figure 12 shows the minimum entropy of the positions of the non-zero bits of the behavioral responses of an SRAM BPUF instance.

### Description of a Preferred Embodiment of the Invention

The present solution improves the security of reported PUFs by adding another layer of security. The behavioral and physical unclonable function (BPUF) of the present invention exploits inherent behavioral and physical features of the manufactured devices that are caused by manufacturing process variations.

A BPUF generates two or more reproducible, unique and unpredictable responses to given challenges, exploiting the variations produced during the manufacturing process.

Hence, BPUFs evaluate more distinctive features than PUFs reported until now, which allows increasing security. In addition, the distinctive features evaluated are not only physical, as in the PUFs, but also behavioral. Advantages of considering behavioral features are that, in general, they are more difficult to attack than physical features because they take into account more dynamic behaviors. Hence, evaluating behavioral conditions adds security to physical ones.

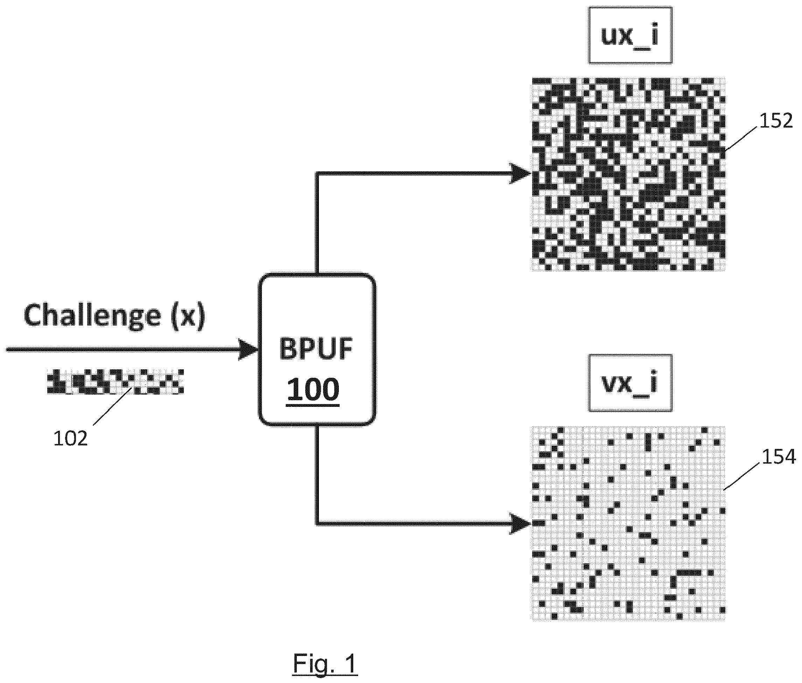

Figure 1 shows an example of how a BPUF 100 is challenged by a binary challenge x 102 and generates two binary responses, a physical response *ux_i* 152 and a behavioral response *vx_i* (154). The bits with logic value 1 are shown in black and those with logic value 0 are shown in white. The physical response *ux_i* 152 corresponds with the typical output of a PUF, whereas the behavioral response *vx_i* 154 is a new, additional output.

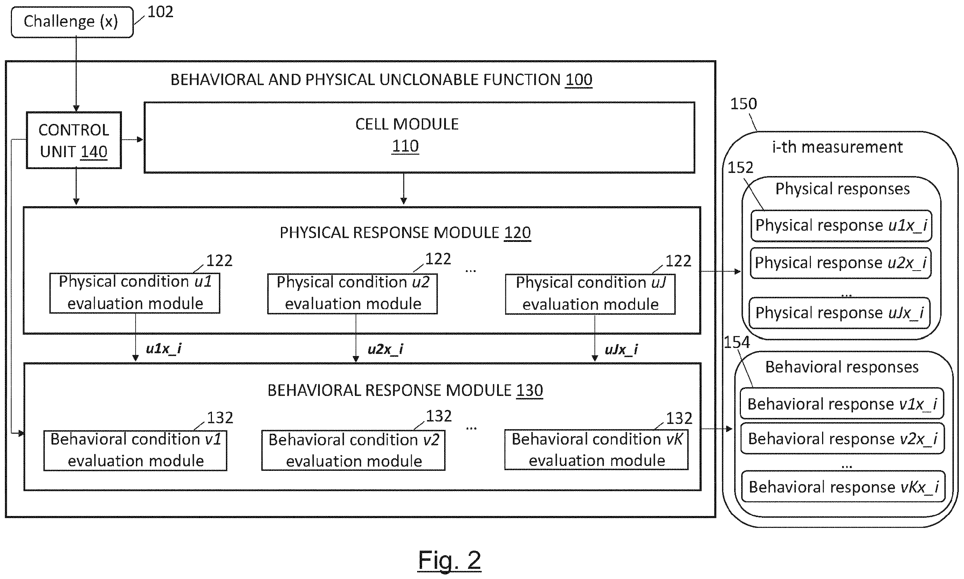

Furthermore, the BPUF 100 may also consider a combination of multiple physical responses 152 (*u1x_i, u2x_i,* ..., *uJx_i*) and multiple behavioral responses 154 (*v1x_i, v2x_i,* ..., *vKx_i*)*,* as shown in the block diagram of Figure 2. The BPUF 100 comprises a cell module 110, a physical response module 120, a behavioral response module 130 and a control unit 140, which is in control of the different modules. In the embodiment of Figure 2, the physical response module 120 is formed by a plurality of J physical condition evaluation modules 122. Each physical condition evaluation module 122 is configured to evaluate a different physical condition *u* (*u1, u2,* ..., *uJ*) on the cell module 110, when addressed by a challenge (x) 102, to generate a physical response 152 of an *i-th* measurement 150, wherein each physical response 152 is reproducible, unique and unpredictable

Similarly, the behavioral response module 130 of Figure 2 is formed by a plurality of *K* behavioral condition evaluation modules 132. Each behavioral condition evaluation module 132 is configured to evaluate a different behavioral condition *v* (*v1, v2,* ..., *vK*) on one or more physical responses (*u1x_i, u*2*x_i,* ..., *uJx_i*) for a set of R measurements to generate a behavioral response 154 of the *i-th* measurement 150, wherein each behavioral response 154 is reproducible, unique and unpredictable.

The physical and behavioral responses have the following features:
- The physical responses are reproducible: several measurements of the physical response, ux, of a given BPUF instance are very similar when the instance is challenged by the same challenge x.
- The behavioral responses are reproducible: several measurements of the behavioral response, vx, of a given BPUF instance are very similar when the instance is challenged by the same challenge x.
- The physical responses of a BPUF instance are unique: the physical responses of two different BPUF instances are very dissimilar, regardless the measurement, for the same challenge x.
- The behavioral responses of a BPUF instance are unique: the behavioral responses of two different BPUF instances are very dissimilar, regardless the measurement, for the same challenge x.
- Both kinds of responses (physical and behavioral) of a BPUF are unpredictable because there is no method to predict the response provided by an instance to a new challenge, neither totally nor partially.
- Information about the physical response ux cannot be obtained from the behavioral response vx.

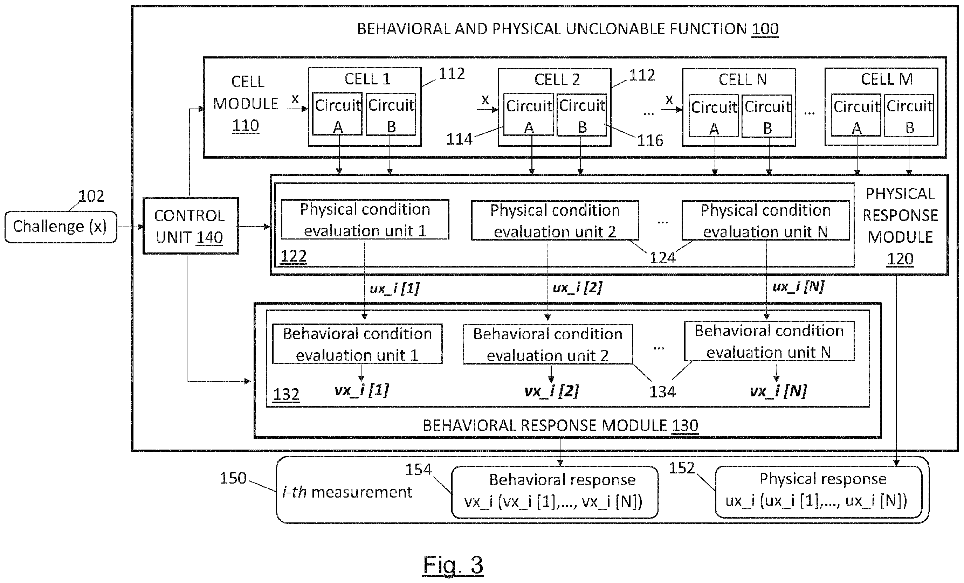

Figure 3 represents a detailed block diagram of the components of the BPUF. In this example the BPUF only comprises one physical condition evaluation module 122 and one behavioral condition evaluation module 132, and therefore only one physical response 152 and one behavioral response 154 are generated by the BPUF 100 for an *i-th* measurement 150.

The cell module 110 is formed by a plurality of M cells 112. Each cell 112 comprises first 114 and second 116 electronic circuits (i.e. circuits A and B), wherein both first and second electronic circuits (114, 116) of each cell 112 are theoretically identical. The control unit 140 is configured to challenge a plurality of N cells 112 (with N≤M) in response to a challenge (x) 102 received. The physical condition evaluation module 122 evaluates a determined physical condition u on the electronic circuits (114, 116) of the N cells 112 addressed by the challenge (x) to generate an N-bit physical response 152 of an *i-th* measurement 150. The behavioral condition evaluation module 132 generates an N-bit behavioral response 154 of the i-th measurement 150.

In the embodiment depicted in Figure 3, the physical condition evaluation module 122 comprises N physical condition evaluation units 124. Each physical condition evaluation unit 124 is configured to evaluate the physical condition *u* on the electronic circuits (114, 116) of one of the N cells addressed by the challenge (x). This way, physical condition evaluation unit 1 evaluates the physical condition *u* on cell 1, physical condition evaluation unit 2 evaluates the physical condition *u* on cell 2, and so on.

The behavioral condition evaluation module 132 of Figure 3 comprises N behavioral condition evaluation units 134. Each behavioral condition evaluation unit 134 is configured to evaluate a behavioral condition v on the physical condition *u* evaluated on at least one of the N cells 112 addressed by the challenge x for a set of R measurements. In the example of Figure 3, each behavioral condition evaluation unit 134 evaluates a behavioral condition v on the physical condition *u* evaluated on the corresponding cell. This way, the behavioral condition evaluation unit 1 evaluates the behavioral condition *v* on the physical condition (*ux_i[1]*) evaluated on cell 1 by the physical condition evaluation unit 1, and so on.

According to an embodiment, the *b-th* bit value (*vx_i[b]*) of the behavioral response *vx_i* (154) is a first value (e.g. logic "1" value) if the *b-th* bits of the physical response of the set of R measurements (*ux_(j*+*1)[b], ux_(j*+*2)[b],* ..., *ux_(j*+*R)[b]*) meet a condition on a non-invertible function that is evaluated by a behavioral condition evaluation unit 134 of the behavioral condition evaluation module 132 when the *b-th* cell is challenged, and is a second value, opposite to the first value (e.g. logic "0" value), if the condition is not met. In an embodiment, the *b-th* bit value (*vx_i[b])* of the behavioral response *vx_i* (154) is a first value if the R values measured of the *b-th* bit of the physical response (*ux_(j*+*1)[b],* ..., *ux_(j*+*R)[b])* are the same as the value of a reference bit (*ux_0[b]*) of a reference physical response *ux_0*, and is a second value, opposite to the first value, if at least one of the R values measured of the *b-th* bit of the physical response (*ux_(j*+*1)[b],* ..., *ux_(j*+*R)[b])* is not the same as the value of the reference bit (*ux_0[b]*)*.*

The first 114 and second 116 electronic circuits of each cell 112 in the cell module 110 may be electronic circuits of the type used in PUFs. In an embodiment, the *b-th* bit value (*ux_i [b])* of the physical response *ux_i* 152 is a first value, if the physical condition *u* evaluated on the *b-th* cell 112 is met; and is a second value, opposite to the first value, if the physical condition *u* evaluated on the *b-th* cell 112 is not met.

The two theoretically identical constructions (circuit A and circuit B) that form each cell may be, for instance, ring oscillators (ROs). In that case, the physical condition evaluated may be the oscillation frequency of the ROs, and a cell is challenged by enabling both ROs. The b-th bit (*ux_i [b])* is 1 if the oscillation frequency of the RO of the circuit A is greater than the oscillation frequency of the RO of the circuit B in the cell *b* at the *i-th* measurement; and *ux_i [b]* is 0 if the oscillation frequency of the RO of the circuit B is greater than the oscillation frequency of the RO of the circuit A. The bit *vx_i [b]* of the behavioral response may be obtained, for instance, as *vx_i[b]*= OR[XOR(*ux_i[b],ux_0[b]*)*,* ..., XOR(*ux_(i-R*+*1)[b},ux_0[b]*)]*.*

In another embodiment, the two theoretically identical construction elements (circuit A and circuit B) can be inverters that are cross-coupled to form each cell so that each cell has two stable operating points and one unstable point. The physical condition evaluated is the stable operating point reached as the consequence of the positive feedback loop. A cell is challenged by powering it up. The bit *ux_i [b]* is 1 if the inverter of the circuit A of the cell *b* imposes the logic 1 as stable operating point; and *ux_i[b]* is 0 if the inverter of the circuit A of the cell *b* imposes the logic 0 as stable operating point. The bit *vx_i [b]* of the behavioral response can be obtained, for instance, as *vx_i[b]=* OR[XOR(*ux_i[b],ux_0[b]*)*,* ..., XOR(*ux_(i-R+1)[b],ux_0[b]*)]*.*

As already explained in Figure 2, in BPUFs several physical conditions can be evaluated instead of only one as in reported PUFs. For example, BPUFs based on ROs that evaluate only one physical condition can evaluate if the frequency difference of a pair of ring oscillators belongs to one of 2 interval of values (positive or negative), thus obtaining one bit per cell, as commented above. In addition, BPUFs based on ROs that evaluate J physical conditions can evaluate if the frequency difference of a pair of ring oscillators belongs to one of 2 to the power of J intervals or values, thus obtaining J bits per cell addressed by the challenge ({ux1[b], ..., uxJ[b]} for the cell b).

As in the case of physical conditions, several response bits can be obtained if several behavioral conditions are evaluated. For example, BPUFs based on ROs that evaluate only one behavioral condition (if the frequency difference of a pair of ring oscillators is always positive in several measurements or not) obtain one bit per cell. Similarly, BPUFs based on SRAMs that evaluate if the start-up value of a cell is always the same in several measurements or not (the start-up value shows or not bit flipping) obtain one bit per cell. In addition, BPUFs that evaluate K behavioral conditions can evaluate if the times a bit flips belong to one of 2 to the power of K intervals or values, thus obtaining K bits per cell addressed by the challenge ({vx1[b], ..., vxK[b]} for the cell b).

Therefore, instead of the challenge-response pairs {x, ux} of current PUFs, the BPUF of the present invention can have (1 + J + K)-tuples of challenge-responses {x, ux1, ..., uxJ, vx1, ..., vxK}. BPUFs are weak if the sets of challenge-response tuples are small.

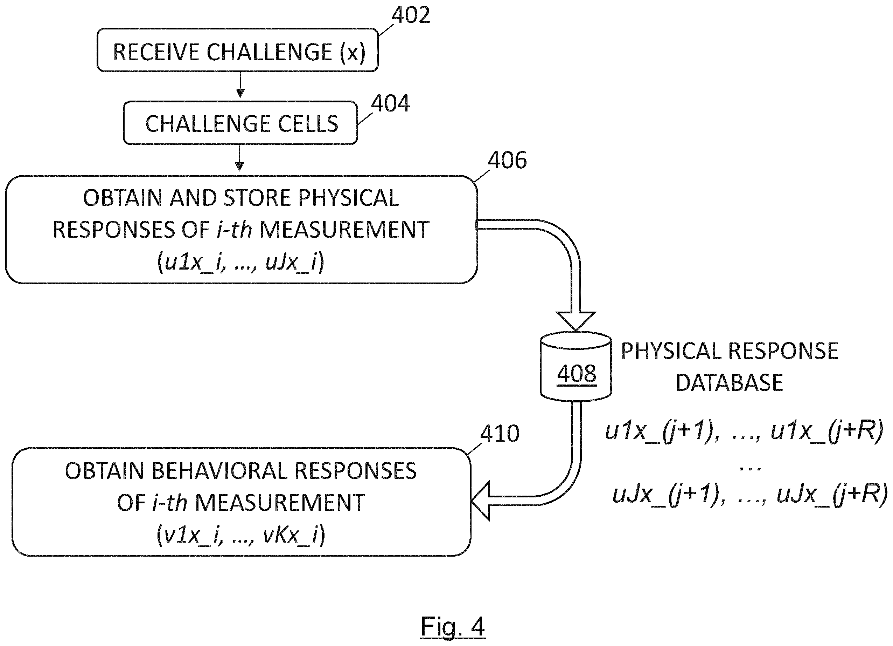

Figure 4 depicts a flow diagram of the actions performed by the control unit 140 of a BPUF 100 having J physical condition evaluation modules 122 and K behavioral condition evaluation modules 132, as in the example of Figure 2. The control unit 140 receives 402 a challenge (x), and challenges 404 the N cells according to the challenge received (e.g. the challenge may be powering up the cells). Then, the control unit 140 obtains 406 the J physical responses of an i-th measurement, storing them on a physical response database 410. Finally, the control unit 140 obtains the K behavioral responses of the i-th measurement using the stored physical responses.

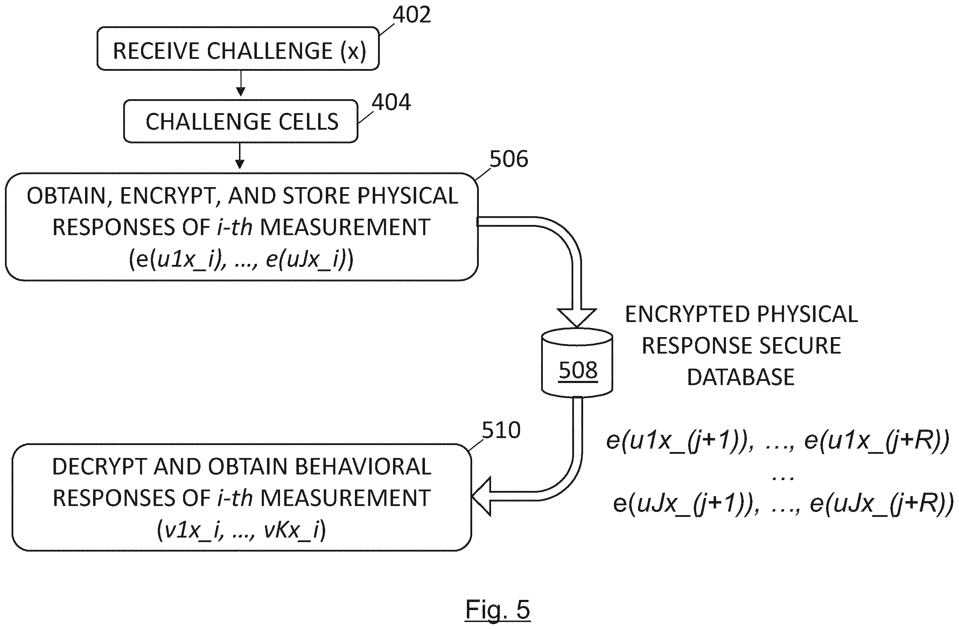

Figure 5 shows a flow diagram similar to the one depicted in Figure 4, but with the physical responses being encrypted in step 506, stored in an encrypted physical response secure database 508 and decrypted prior to obtaining the behavioral responses in step 510.

The physical conditions usually evaluated in current PUFs give unbiased responses, with average fractional Hamming weights of 0.5. In order to allow for more versatility, the conditions considered for BPUFs can provide biased responses, that is, with different numbers of 1's and 0's. Without loss of generality, let us assume that the number of 1's is equal or less than half of the bits. This happens to the above commented example of flipping bits in SRAM PUFs, which usually are around 10% of the start-up values. Since responses can be biased, similarity between BPUF responses is better measured with Jaccard distance (JD) instead of Hamming distance (HD).

The Jaccard distance between two binary vectors, vx_i and vx_k, JD(vx_i,vx_k), can be calculated as the quotient between: (a) the Hamming distance between vx_i and vx_k, that is, HD(vx_i, vx_k), and (b) the number of logic 1's that are in the vector resulting from OR-ing vx_i and vx_k.

The Jaccard distance between two binary vectors, vx_i and vx_k, JD(vx_i,vx_k), can also be calculated as the quotient between: (a) the double of the Hamming distance between vx_i and vx_k, that is, 2*HD(vx_i, vx_k), and (b) the sum of the number of logic 1's that are in the vector vx_i plus the number of logic 1's that are in the vector vx_k plus the HD(vx_i, vx_k).

Jaccard distances evaluated between responses of the same instance to the same challenges at different measurements (genuine population) are called intra Jaccard distances. Intra Jaccard distances of BPUF responses with perfect reproducibility are zero. Jaccard distances evaluated between responses of different instances to the same challenges (impostor population) is called inter Jaccard distances. Inter Jaccard distances of BPUF responses with perfect uniqueness are one.

Since the number of logic 1's in some of the BPUF responses, C, can be smaller than 0.5*N, they do not fulfill the unbiased condition needed to generate random numbers. Hence, randomness or unpredictability in biased responses is not understood as in current PUFs, where the N-bit response themselves are analyzed, but the analysis is done on the positions of the C logic 1's in the responses. It can be known that a response has C logic 1's but there is no ways to predict which C out of the N are them. If the N bits of a response (physical or behavioral) are represented by their position, codified with log2 N bits, randomness and unpredictability are analyzed in the binary sequence formed by the Q (Q = C ^{∗} log₂ N) bits that encode the positions of the C logic 1's. Given R of these Q-bit responses, the probability of finding a 1 at each position b, p[b], can be calculated as well as the minimum entropy of the sequences, using the probabilities at all the positions. If the positions of the logic 1's are random, these Q-bit sequences should have average fractional Hamming weight equal to 0.5.

Let us assume a weak BPUF with a small set of challenge-response tuples, like one based on ROs or SRAMs, that has to be authenticated by a verifier. Let us consider, without loss of generality, the simplest BPUF with one physical and one behavioral response. A BPUF instance is authenticated if for the challenge x, the measured responses ux and vx are enough similar to the registered physical and behavioral responses ux_0 and vx_0. Similarities can be combined with several operators to compute a global similarity score which is compared with a global threshold or similarities of each response can be compared with individual thresholds.

The reference responses ux_0 and vx_0 should be protected in privacy-preserving authentication protocols because they represent the BPUF identity. In the case of current weak PUFs, helper data algorithms have been widely used to avoid the virtual copy of the reference physical response, ux_0. The helper data, PDx, are obtained by XOR-ing the reference response ux_0 with a sequence P, PDx = XOR(ux_0, P). The sequence P results from encoding a secret S (usually related to a cryptographic key) with an error-correcting code, P = encoding(S). The PUF response, ux_0, should not have any correlation or bias so that no information about the secret S could be leaked from the helper data. During verification, new measurements of the response are taken, ux_i, and they are compared to ux_0. If the new measurements do not fulfill a certain degree of similarity when compared with the information registered, the authentication fails. The procedure is to XOR ux_i with the helper data to obtain a noisy version of P, P' = XOR(ux_i, PDx). If the noise, XOR(ux_i, ux_0), is small, S can be recovered from P' using the error-correcting code, S = decoding(P'). In other words, the secret S can be recovered from the helper data if the number of errors is below a threshold Eu_max. Otherwise, secret recovering fails.

The probability distribution usually employed to model the occurrence of bit errors in the physical responses of the genuine population is a binomial distribution, where the bit error probability is the same for a 0 that changes to 1, and for a 1 that changes to 0, because it is assumed a symmetric model. The bit error probability can be estimated experimentally as the average fractional Hamming distance between physical responses of the genuine instances. Using the bit error probability of the physical response, the threshold Eu_max is selected so as to ensure a low probability of false rejection.

The bit error probability of the behavioral response is usually higher and more dependent on operating conditions than the physical response. Hence, the errors in the behavioral responses are not adequate to be corrected by an error-correcting code.

The solution presented herein to obfuscate the reference behavioral response vx_0 is the use of a cryptographic algorithm that employs a randomness signal seed_0. The solution satisfies diversity and revocability because different protected responses, IDx_0, can be generated from the same vx_0 by changing the randomness signal, seed_0. The solution satisfies irreversibility because is computationally difficult to recover vx_0 from IDx_0, and unlinkability because IDx_0 does not reveal anything about the specific device.

A device 200 containing a BPUF 100 can be authenticated by a verifier 300 with a multi-modal cryptographic authentication method comprising two phases: a registration phase and a verification phase.

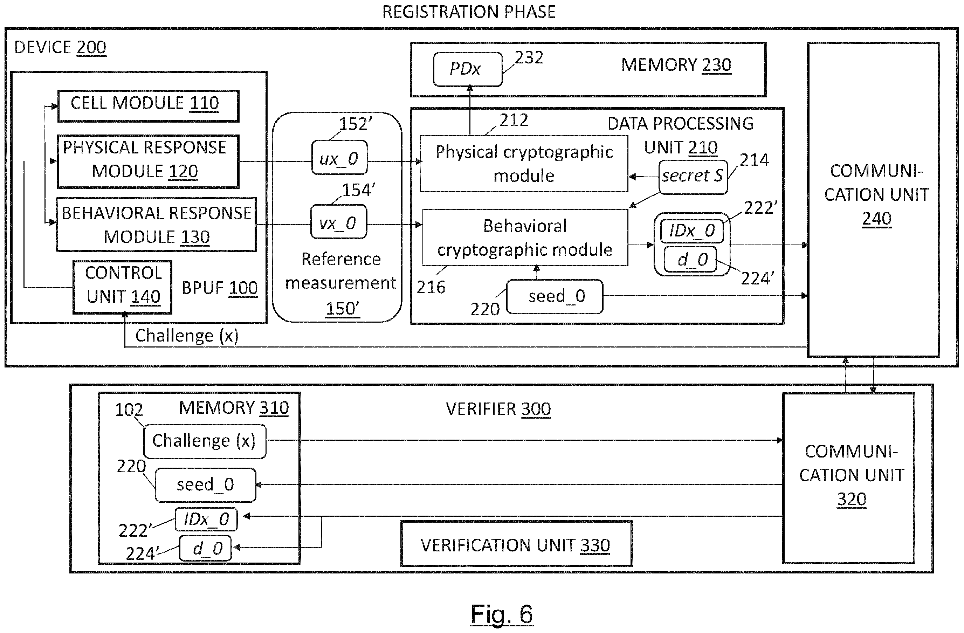

Figure 6 illustrates the registration phase of the authentication method, in which reference identifying data of a BPUF is obtained and stored in a verifier 300. The registration phase comprises the following steps:
- A communication unit 320 of a verifier 300 sends a challenge (x) 102 to a device 200 containing a BPUF 100.
- The BPUF 100 generates an N-bit physical response *ux_0* 152' and an N-bit behavioral response *vx_0* 154' of a reference measurement 150' in response to the challenge (x) 102.
- A physical cryptographic module 212 of the device 200 applies a cryptographic algorithm (e.g., a helper data algorithm) on the physical response *ux_0* 152' of the reference measurement 150' using a secret S 214, generating non-sensitive helper data PDx 232, which is stored in a memory 230 of the device 200.
- A behavioral cryptographic module 216 of the device 200 applies a cryptographic algorithm on the behavioral response *vx_0* 154' of the reference measurement 150' using a random seed *seed_0* 220 and the secret S 214 to generate non-sensitive reference identifying data *IDx_0* 222'.
- A communication unit 240 of the device 200 sends the random seed *seed_0* 220 and the reference identifying data *IDx_0* 222' to the verifier 300. These data, received by a communication unit 320 of the verifier 300, are stored in a memory 310 of the verifier 300. Optionally, the number of logic 1's *d_0* 224' in the reference behavioral response vx_0 154' may also be obtained by the device 200 (e.g. by the behavioral cryptographic module 216), sent to the verifier 300, and stored in the memory 310 of the verifier 300.

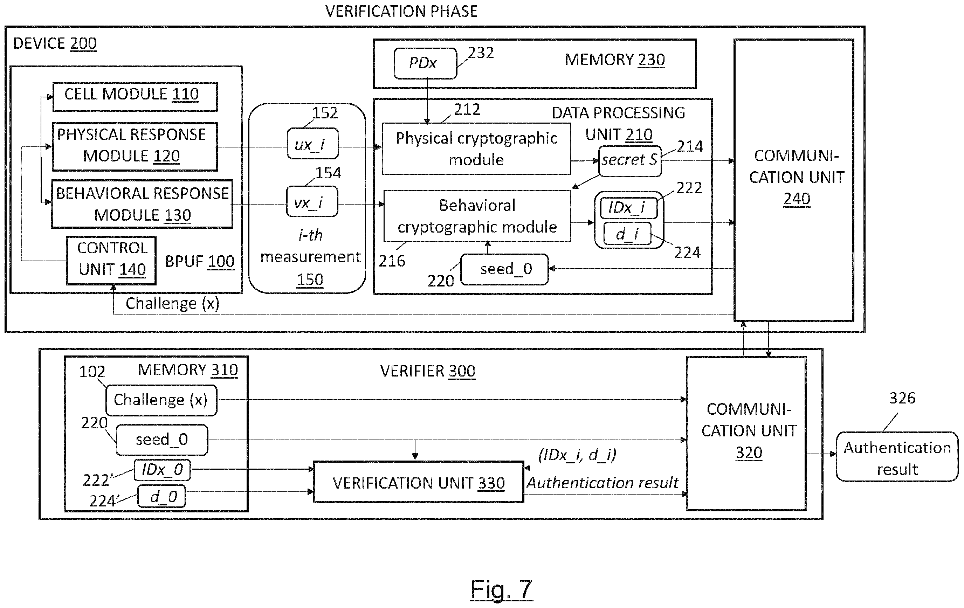

Figure 7 represents the verification phase of the authentication method. The verification phase comprises:
- The communication unit 320 of the verifier 300 sends the same challenge (x) 102 used in the registration phase and the random seed *seed_0* 220 to the device 200.
- The BPUF 100 generates an N-bit physical response *ux_i* 152 and an N-bit behavioral response *vx_i* 154 of an *i-th* measurement 150 in response to the challenge (x) 102.
- The physical cryptographic module 212 of the device 200 reconstructs the secret S 214 using the physical response *ux_i* 152 of the *i-th* measurement 150 and the non-sensitive helper data PDx 232 stored in the memory 230 of the device 200.
- The behavioral cryptographic module 216 of the device 200 applies the same cryptographic algorithm used in the registration phase on the behavioral response *vx_i* 154 of the *i-th* measurement 150 using the random seed *seed_0* 220 and the reconstructed secret S 214 to generate non-sensitive identifying data *IDx_i* 222.
- The communication unit 240 of the device 200 sends the identifying data *IDx_i* 222 to the verifier 300, using a secure communication protocol.
- A verification unit 330 of the verifier 300 computes a distance using the identifying data *IDx_i* 222 and the reference identifying data *IDx_0* 222'. The verification unit 330 determines and communicates an authentication result 326 of the device 200. The authentication result 326 is successful if the computed distance is smaller than an authentication threshold, and fails if the distance is greater than the threshold. If the distance is equal to the threshold, the authentication may be considered as a success or a failure.

If the verification phase of the multi-modal cryptographic authentication method claimed above ends with an authentication success, the device identifying data IDx_k used by the verifier (IDx_0 if it is the first successful authentication) can be replaced by the refreshed identifying data named IDx_(k+1) to be used in the next verification phase; IDx_(k+1) being derived from vx_i, which has been verified, and a fresh random seed seed_(k+1), where seed_(k+1) replaces the previously used seed (seed_0 if it is the first successful authentication). The possible successful attacks are reduced because the data employed in the authentication protocol are fresh.

In order to ensure that the device is truly the origin of the messages sent by the device, asymmetric cryptography can be employed in the secure communication protocol, in which the secret S is related to a pair of secret and public cryptographic keys (SK and PK uniquely associated with the device), and SK is used by the device in the digital signatures of the messages sent by it.

In an embodiment, the cryptographic algorithm applied by the behavioral cryptographic module 216 of the device 200 is based on a computationally hard problem. The computationally hard problem can be a learning with errors (LWE) problem or one of its variants (like the Ring Learning With Errors, RLWE, or Learning Parity with Noise, LPN), in which the behavioral response and S are the secrets, and the distance calculated by the verification unit 330 is computed from the result of adding or subtracting the identifying data *IDx_i* 222 and the reference identifying data *IDx_0* 222', not needing the verifier any knowledge about either the secret S of the device or their behavioral responses (except, maybe, the number of 1's in the behavioral responses).

For example, in the case of LPN, the device identifying data IDx_0 are generated from vx_0, seed_0, and S as IDx_0 = XOR(A * vx_0, S), where A is a binary matrix of dimension L*N, with 1's and 0's distributed uniformly, generated from seed_0, with L>N, and the secret S is a vector of L bits, with each bit S[b] following a Bernoulli distribution with a parameter T (0<T<0.5), which means that the probability of S[b] being 1 is T and the probability of S[b] being 0 is 1-T. The computationally hardness of LPN problem ensures that it is computationally infeasible to recover vx_0 or S, given IDx_0 and A (or seed_0). The verification unit (330) of the verifier computes XOR(IDx_i, IDx_0)= A ^{∗} XOR(vx_i,vx_0), and, since A is known, the distance between vx_i and vx_0 is computed and, besides, it is verified that the device knows S if the result from XOR(IDx_i, IDx_0) belongs to the images generated from A. The Hamming distance between vx_i and vx_0 can be obtained from XOR(vx_i,vx_0). The Jaccard distance between vx_i and vx_0 can be obtained from the Hamming distance and the number of 1's in the behavioral responses (as commented above).

In another embodiment, the cryptographic algorithm applied by the behavioral cryptographic module 216 can be a symmetric ciphering algorithm that applies a XOR operation on the behavioral response *vx* 154 with a salt *S_0* generated by a cryptographically secure pseudorandom number generator (CSPRNG). In this case, the distance computed by the verification unit 330 of the verifier 300 can be calculated as the division of (i) the Hamming distance between the identifying data *IDx_i* 222 and the reference identifying data *IDx_0* 222', and (ii) the number of logic 1's in the vector resulting from XOR{OR[*IDx_i, IDx_0*]*, S_0*}. Alternatively, the distance can be computed as the division of (i) the double of the Hamming distance between the identifying data *IDx_i* 222 and the reference identifying data *IDx_0* 222', and (ii) the sum of (a) the number of logic 1's *d_i* 224 in the behavioral response *vx_i* 154 of the *i-th* measurement 150, sent by the communication unit 240 of the device 200, and (b) the number of logic 1's *d_0* 224' in the behavioral response *vx_0* 154' of the reference measurement 150', sent by the communication unit 240 of the device 200, and (c) the Hamming distance between the identifying data *IDx_i* 222 and the reference identifying data *IDx_0* 222*'*.

The physical attacks reported to PUFs are able to change the physical responses but statically not dynamically, that is, they are able to fix a physical response to the registered one, ux_0. The proposed BPUF shows tamper evidence to these attacks because if the physical response is fixed, the behavioral response fails authentication. To be successful, the attacker would have to act as the BPUF is being challenged so as to change the physical response adequately, because the behavioral response evaluates changes in the physical responses, as a proof of liveness. In addition, the attack should be done quickly because the proposed behavioral condition must be evaluated in a given time, so that violation of time evaluation is a tampering proof. In the other side, the physical cloning attacks reported till now would have a low success rate in the proposed BPUFs since cloning behavioral responses is much more difficult.

BPUFs based on SRAMs were analyzed experimentally in order to validate the proposals of the present invention. The SRAMs analyzed were low-power dual-port 8-transistor SRAMs fabricated in the 90-nm CMOS technology. The well-known start-up values of SRAM cells were measured as physical response. The behavioral response was obtained as vx_i[b]= OR[XOR(ux_j[b],ux_0[b]), ..., XOR(ux_(j+R-1)[b],ux_0[b])], with R = 20. Each BPUF response has 7296 bits (128 words of 57 bits).

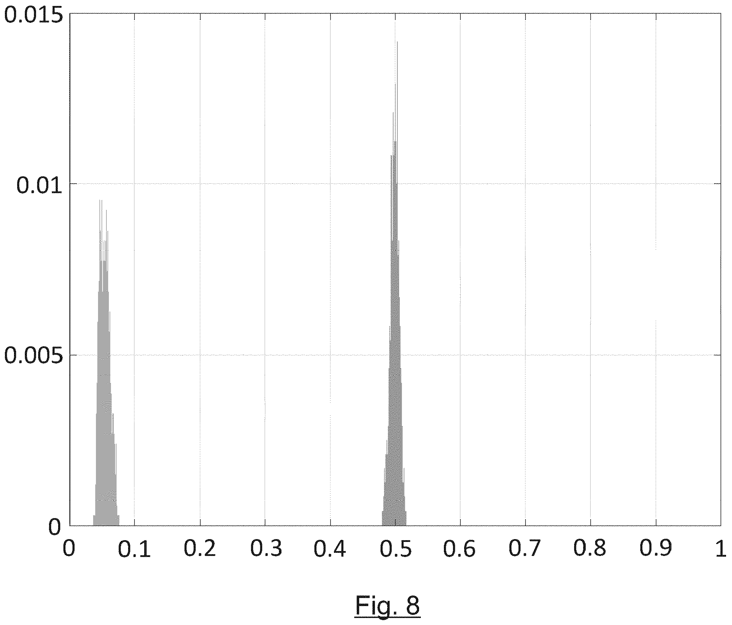

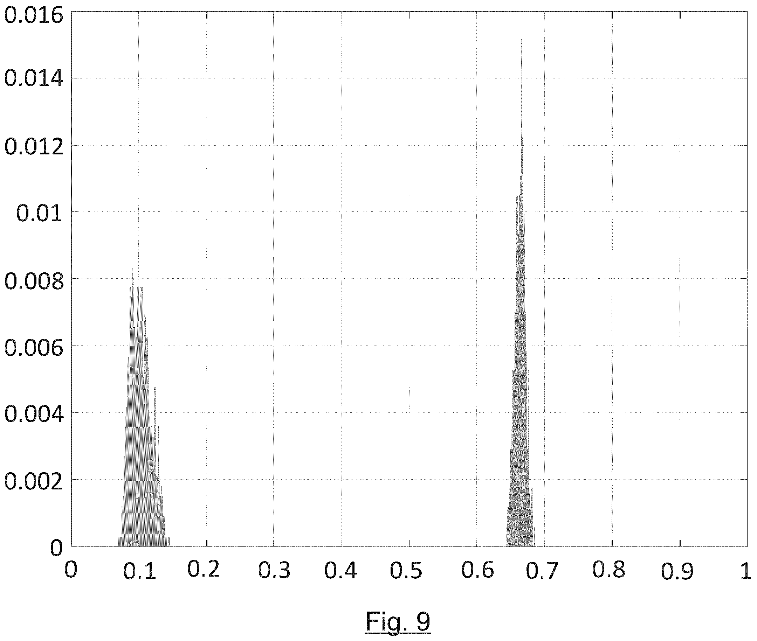

For the physical responses, Figure 8 shows, on the left, the distribution of the fractional Hamming distances (FHDs) between genuine instances (using 1280 comparisons) and, on the right, the distribution of the FHDs between genuine and impostor instances (using 9600 comparisons). Analogously, Figure 9 shows the same distributions but using the Jaccard distance (JD).

It can be seen that although the FHD based metric shows a good separation between both populations, the use of JD allows further distancing the genuine population (which is near the ideal value of 0) from the impostor (which is near the ideal value of 1, instead of 0.5 as in the FHD).

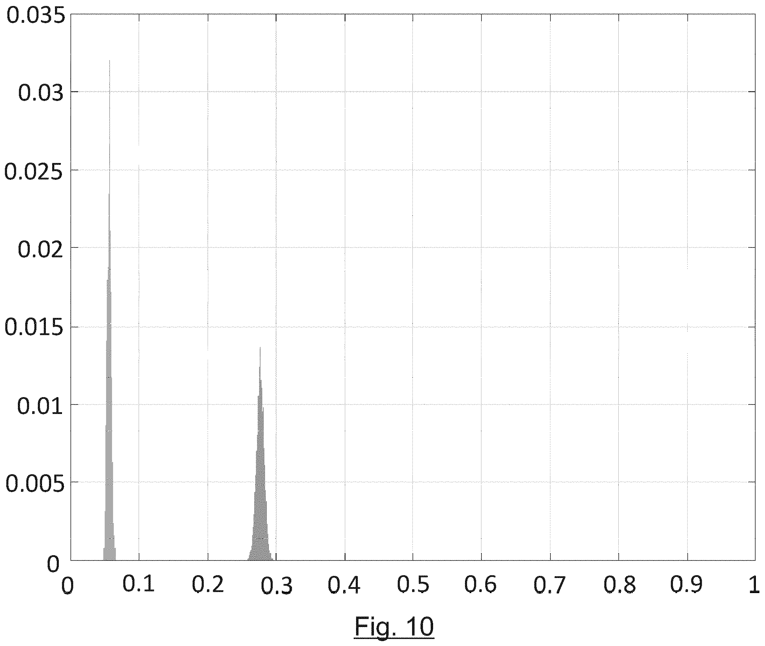

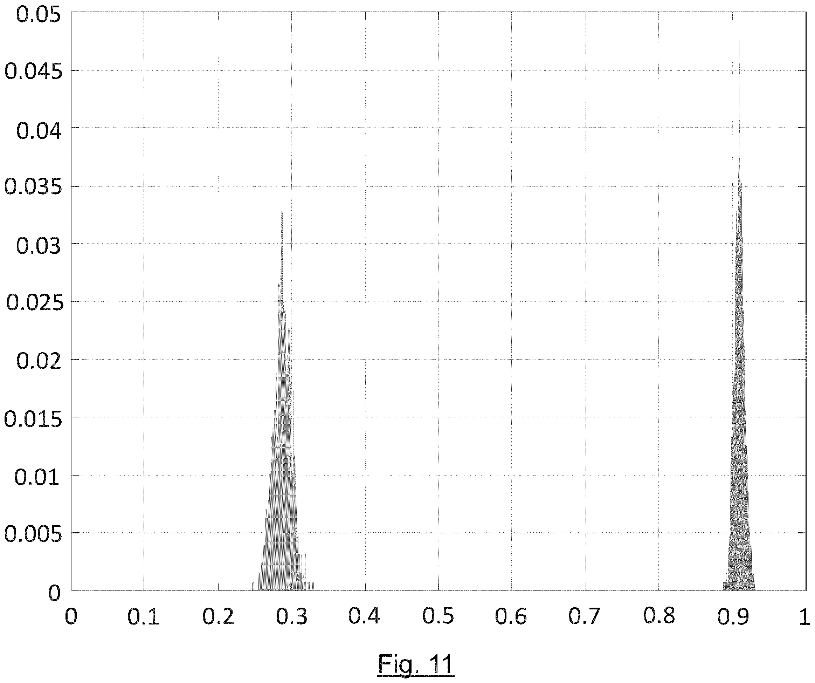

Similar results are shown in Figures 10 and 11 with the genuine and impostor populations (also using 1280 and 9600 comparisons, respectively) of the behavioral responses. In this case, it is more apparent that the use of JDs represents in a much more significant way the distance between the genuine and impostor populations.

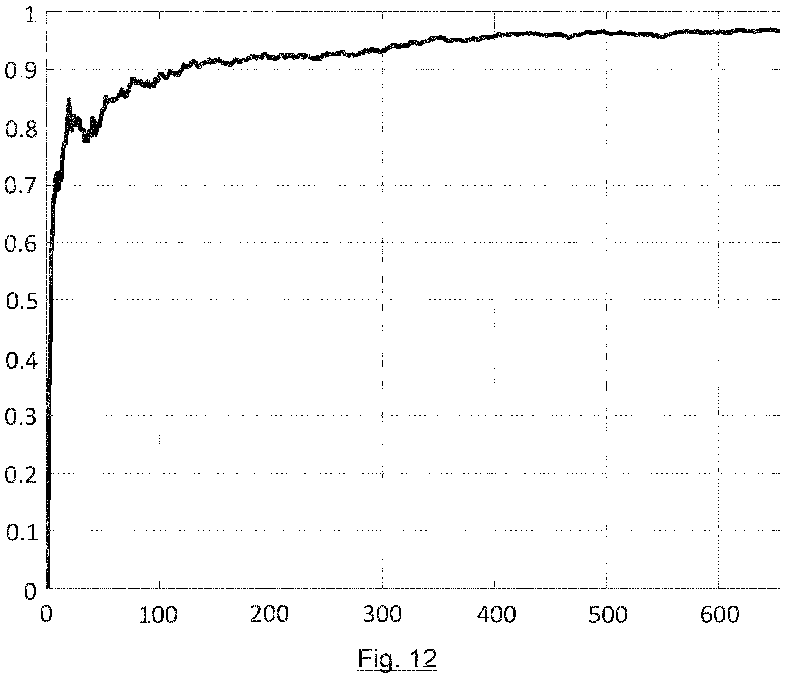

640 measurements were analyzed (which have proven to be sufficient) to evaluate the unpredictability of the positions of the non-zero bits of the behavioral responses. Since the number of bits of the responses was 7296, the size of the response was limited to the lowest power of 2, so that 12 bits were used to encode each non-zero position of the response. The average fractional Hamming weight of these positions (the normalized number of 1's) was 0.4985, very close to the ideal value of 0.5 for unpredictable sequences. With respect to the minimum entropy that the locations of the non-zero bits have, Figure 12 shows that it perfectly tends to the ideal value of Hmin = 1, as desired.

An example of realization with SRAM BPUFs of the multimodal authentication protocol patented is as follows. Let us assume an honest verifier that neither provisions multiple SRAM BPUF instances with the same cryptographic keys, nor compromises keys or BPUF responses. Let us also assume that the devices with the SRAM BPUF instances can be attacked physically. Attacks to the verifier are not considered because it is assumed that the weak links are the devices with the BPUF instances and the verifier can be protected strongly.

The number of errors of the genuine physical responses is assumed to be under the threshold Eu_max that allows them to be corrected by an error-correcting code, and a helper data algorithm is employed. In the registration phase, which is supposed to be free of adversarial attacks, either the verifier assigns a cryptographic key (S) to the SRAM BPUF instance or the SRAM BPUF instance generates it. Since the SRAM instances can be attacked physically, the key is not stored in the instance, but the helper data PDx = XOR(ux_0, encoding(S)) are generated. The helper data can be stored without protection in the device with the BPUF instance or communicated between the device and the verifier through a non-protected channel.

In this example of realization, random information is employed to obfuscate the behavioral responses. In the registration phase, the verifier registers the non-sensitive data IDx_0=XOR(vx_0, S_0), where S_0 is generated by a cryptographically secure pseudorandom number generator, CSPRNG, consisting in a block cipher in counter mode (like the AES in the NIST approved CTR-DRBG mode). It uses the cryptographic key (S) and a nonce (a number used once, seed_0), so that S_0 = CSPRNG(S; seed_0;R), with (seed_0 + R) as the starting value of the counter.

In the verification phase, the verifier sends the nonce seed_0 to the device. The SRAM BPUF generates a new behavioral response, vx_i, in R steps, by also generating R new physical responses (R times of powering down and up). The generation of the behavioral response is done in a secure way, as follows. At the first step (j = 1), the instance generates a physical response, ux_1, combines it with the helper data, and uses the decoder of the error-correcting code to recover S. If the physical response verifies that the number of errors between ux_1 and ux_0 does not exceed the number of errors per coded bit that can be corrected by the error-correcting code, the cryptographic key is recovered correctly and also ux_0. The SRAM instance needs the value ux_1 to generate the behavioral response. However, since this information is sensitive, it cannot be stored in the device (because it can be attacked physically) or communicated to the verifier (because the communication channel is not protected). Hence, the device generates:
IDx1_0=XOR[XOR(ux_1, ux_0), S1], where S1= CSPRNG(S; seed_0; j) with j = 1.

IDx1_0 is stored without further protection for the next step. At the second verification step (j = 2), the instance generates a new physical response, ux_2, combines it with the helper data to recover both the cryptographic key and ux_0, and generates the following non-sensitive data required for the next step:
IDx2_0=XOR[OR(XOR(ux_2, ux_0), XOR(IDx_1, S1)), S2], where S2= CSPRNG(S; seed_0; 2).

Finally, at step R, the SRAM BPUF instance provides:
IDx_i=XOR[OR(XOR(ux_R, ux_0), XOR(IDx_(R-1), S(R-1))), S_0]= XOR(vx_i, S_0).

The device sends the non-sensitive data IDx_i to the verifier through the non-protected channel. Finally, the BPUF instance is checked by the verifier, and it is authenticated if, in this realization example, the quotient between: (a) the Hamming distance between IDx_i and IDx_0, that is, HD(IDx_i, IDx_0), and (b) the number of logic 1's that are in the vector resulting from XOR{OR[IDx_i, IDx_0], S_0} is below the threshold Ev_max. The verifier needs the knowledge of S_0 in this realization example. In other realization examples, the verifier does not need any knowledge about either the secret S or the behavioral responses (except, maybe, the number of 1's in the behavioral responses).

The salts used in the authentication procedure are fresh thanks to the nonces and the counter mode used in the CSPRNG. If the verification phase ends with an authentication success, the device identifying data IDx_k used by the verifier (IDx_0 if it is the first successful authentication) can be replaced by the refreshed identifying data named IDx_(k+1) to be used in the next verification phase; IDx_(k+1) being derived from XOR(vx_i, S_(k+1)), with S_(k+1)= CSPRNG(S; seed_(k+1);R). Hence, even if an attacker wants to impersonate the BPUF instance and modifies BPUF messages, injects messages forgeries or replays messages previously sent by the BPUF instance, it will not be able to discover the cryptographic key or any other sensitive information about the BPUF instance. Of course, this protocol can be improved by using asymmetric cryptography (for instance, using digital signatures to ensure the integrity of the messages). For simplicity, only symmetric cryptography has been employed in this realization example.

The behavior of SRAM BPUF instances was evaluated experimentally in several operating conditions (power supply over and below the nominal value, temperature over and below the nominal value, and accelerated aging). Even if the threshold Ev_max was set to the least restrictive case and the attacker knew the reference physical response ux_0 (having succeeded in one of the reported attacks to current PUFs), the highest probability of false acceptance was evaluated as 1.5e-34, which is equivalent to a security of more than 2 to the power of 113 bits, quite enough for a BPUF even in the case of its physical response were successfully attacked.

## Claims

1. A behavioral and physical unclonable function (100), comprising:
a cell module (110) formed by a plurality of M cells (112), each cell (112) comprising a first (114) and a second (116) electronic circuits, wherein the electronic circuits (114, 116) of each cell (112) are identical;
a control unit (140) configured to challenge a plurality of N cells (112) in response to a challenge (x) (102) received;
a physical response module (120), controlled by the control unit (140) and formed by at least one physical condition evaluation module (122), each physical condition evaluation module (122) being configured to evaluate a physical condition (*u*) on the electronic circuits (114, 116) of the N cells (112) addressed by the challenge (x) to generate an N-bit physical response (152) of an *i-th* measurement (150), wherein each physical response (152) is reproducible, unique and unpredictable; and
a behavioral response module (130), controlled by the control unit (140) and formed by at least one behavioral condition evaluation module (132), each behavioral condition evaluation module (132) being configured to evaluate a behavioral condition (v) on at least one physical response for a set of R measurements to generate an N-bit behavioral response (154) of the *i-th* measurement (150), wherein each behavioral response (154) is reproducible, unique and unpredictable.

2. The behavioral and physical unclonable function (100) of claim 1, wherein each physical condition evaluation module (122) comprises at least one physical condition evaluation unit (124), each physical condition evaluation unit (124) being configured to evaluate a physical condition (u) on the electronic circuits (114, 116) of at least one of the N cells addressed by the challenge (x); and
wherein each behavioral condition evaluation module (132) comprises at least one behavioral condition evaluation unit (134), each behavioral condition evaluation unit (134) being configured to evaluate a behavioral condition (v) on at least one physical condition (*u*) evaluated on at least one of the N cells (112) addressed by the challenge (x) for the set of R measurements.

3. The behavioral and physical unclonable function (100) of claim 2, wherein the *b-th* bit value (*vx_i[b])* of each behavioral response *vx_i* (154) is a first value if the *b-th* bits of at least one physical response of the set of R measurements (*ux_(j*+*1)[b], ux_(j+2) [b],* ..., *ux_(j*+*R)[b])* meet a condition on a non-invertible function that is evaluated by a behavioral condition evaluation unit (134) of the corresponding behavioral condition evaluation module (132) when the *b-th* cell is challenged, and is a second value, opposite to the first value, if the condition is not met.

4. The behavioral and physical unclonable function (100) of claim 3, wherein the *b-th* bit value (*vx_i[b])* of each behavioral response *vx_i* (154) is a first value if the R values measured of the *b-th* bit of the physical response (*ux_(j*+*1)[b],* ..., *ux_(j*+*R)[b])* are the same as the value of a reference bit (*ux_0[b]*) of a reference physical response *ux_0,* and is a second value, opposite to the first value, if at least one of the R values measured of the *b-th* bit of the physical response (*ux_(j*+*1)[b],* ..., *ux_(j*+*R)[b])* is not the same as the value of the reference bit (*ux_0[b]*)*.*

5. The behavioral and physical unclonable function (100) of any preceding claim, wherein the first (114) and second (116) electronic circuits of each cell (112) in the cell module (110) are electronic circuits of the type used in physical unclonable functions, and wherein the *b-th* bit value (*ux_i [b])* of each physical response *ux_i* (152) is:
a first value, if the corresponding physical condition (*u*) evaluated on the *b-th* cell (112) is met;
a second value, opposite to the first value, if the corresponding physical condition (*u*) evaluated on the *b-th* cell (112) is not met.

6. A method for secure authentication of a device, the device (200) containing a behavioral and physical unclonable function (100) according to any preceding claim, wherein the method comprises:
a registration phase comprising:
sending, by a communication unit (320) of a verifier (300), a challenge (x) (102) to the device (200);
generating, by the behavioral and physical unclonable function (100), an N-bit physical response *ux_0* (152') and an N-bit behavioral response *vx_0* (154') of a reference measurement (150') in response to the challenge (x) (102);
applying, by a physical cryptographic module (212) of the device (200), a cryptographic algorithm on the physical response *ux_0* (152') of the reference measurement (150') using a secret S (214), to generate non-sensitive helper data PDx (232) which is stored in a memory (230) of the device (200);
applying, by a behavioral cryptographic module (216) of the device (200), a cryptographic algorithm on the behavioral response *vx_0* (154') of the reference measurement (150') using a random seed *seed_0* (220) and the secret S (214) to generate non-sensitive reference identifying data *IDx_0* (222');
sending, by a communication unit (240) of the device (200), the random seed *seed_0* (220) and the reference identifying data *IDx_0* (222') to the verifier (300), where they are stored in a memory (310); and
a verification phase, comprising:
sending, by the communication unit (320) of the verifier (300), the challenge (x) (102) and the random seed *seed_0* (220) to the device (200);
generating, by the behavioral and physical unclonable function (100), an N-bit physical response *ux_i* (152) and an N-bit behavioral response *vx_i* (154) of an *i-th* measurement (150) in response to the challenge (x) (102);
reconstructing, by the physical cryptographic module (212) of the device (200), the secret S (214) using the physical response *ux_i* (152) of the *i-th* measurement (150) and the non-sensitive helper data PDx (232);
applying, by the behavioral cryptographic module (216) of the device (200), the cryptographic algorithm on the behavioral response *vx_i* (154) of the *i-th* measurement (150) using the random seed *seed_0* (220) and the reconstructed secret S (214) to generate non-sensitive identifying data *IDx_i* (222);
sending, by the communication unit (240) of the device (200), the identifying data *IDx_i* (222) to the verifier (300), using a secure communication protocol;
computing, by a verification unit (330) of the verifier (300), a distance using the identifying data *IDx_i* (222) and the reference identifying data *IDx_0* (222'), and determining and communicating an authentication result (326) of the device (200), the authentication result (326) being successful if the computed distance is smaller than an authentication threshold.

7. The method of claim 6, wherein the secure communication protocol employs an asymmetric cryptographic algorithm in which the secret S (214) is related to a pair of private (SK) and public (PK) cryptographic keys uniquely associated with the device (200), and wherein the private cryptographic key (SK) is used by the device (200) in the digital signatures of the messages sent by the communication unit (240).

8. The method of any of claims 6 to 7, wherein the cryptographic algorithm applied by the physical cryptographic module (212) of the device (200) is a helper data algorithm.

9. The method of any of claims 6 to 8, wherein the cryptographic algorithm applied by the behavioral cryptographic module (216) is a symmetric ciphering algorithm that applies a XOR operation on the behavioral response *vx* (154) with a salt S_0 generated by a cryptographically secure pseudorandom number generator (CSPRNG).

10. The method of claim 9, wherein the distance computed by the verification unit (330) of the verifier (300) is calculated as the division of:
the Hamming distance between the identifying data *IDx_i* (222) and the reference identifying data *IDx_0* (222'); and
the number of logic 1's in the vector resulting from XOR{OR[*IDx_i, IDx_0*]*, S_0*}*.*

11. The method of claim 9, wherein the distance computed by the verification unit (330) of the verifier (300) is calculated as the division of:
the double of the Hamming distance between the identifying data *IDx_i* (222) and the reference identifying data *IDx_0* (222'); and
the sum of:
the number of logic 1's *d_i* (224) in the behavioral response *vx_i* (154) of the *i-th* measurement (150), sent by the communication unit (240) of the device (200), and
the number of logic 1's *d_0* (224') in the behavioral response *vx_0* (154') of the reference measurement (150'), sent by the communication unit (240) of the device (200), and
the Hamming distance between the identifying data *IDx_i* (222) and the reference identifying data *IDx_0* (222').

12. The method of any of claims 6 to 8, wherein the cryptographic algorithm applied by the behavioral cryptographic module (216) of the device (200) is based on a computationally hard problem.

13. The method of claim 12, wherein the behavioral cryptographic module (216) applies a commitment scheme based on a learning with errors (LWE) problem, in which the behavioral response *vx* (154) and the secret S (214) are the secrets, and the distance computed by the verification unit (330) of the verifier (300) is calculated from the result of adding or subtracting the identifying data *IDx_i* (222) and the reference identifying data *IDx_0* (222').
